Europäisches Patentamt

European Patent Office

Office européen des brevets

(19)

(11) Numéro de publication: **0 102 653**
**B1**

(12) # FASCICULE DE BREVET EUROPÉEN

(45) Date de publication du fascicule du brevet:
21.09.88

(51) Int. Cl.⁴: **A 63 C 5/06,** F 16 F 7/10,
A 63 B 49/04

(21) Numéro de dépôt: 83200811.4

(22) Date de dépôt: 06.06.83

(54) **Ski muni d'un dispositif amortisseur de vibrations.**

(30) Priorité: 11.06.82 CH 3619/82

(43) Date de publication de la demande:
14.03.84 Bulletin 84/11

(45) Mention de la délivrance du brevet:
21.09.88 Bulletin 88/38

(84) Etats contractants désignés:
AT BE CH DE FR GB IT LI LU NL SE

(56) Documents cité:
DE-A-1 478 110
DE-A-2 747 064
DE-A-2 820 649
DE-B-1 249 018
FR-A-2 382 245
FR-A-2 383 680
GB-A-771 048
US-A-3 113 640
US-A-3 774 730
US-A-4 018 454
US-A-4 050 665
US-A-4 203 596

(73) Titulaire: SKIS DYNASTAR SA, Avenue de
Genève, F-74700 Sallanches (FR)

(72) Inventeur: Arieh, Simon, 24, Av. de la Gare des
Eaux- Vives, CH- 1208 Genève (CH)
Inventeur: Courvoisier, Guy, 38, rue du Grand- Pré,
CH- 1202 Genève (CH)

(74) Mandataire: Dousse, Blasco, 7, route de Drize, CH-
1227 Carouge/Genève (CH)

EP 0 102 653 B1

LIBER, STOCKHOLM 1988

## Description

La présente invention se rapporte à un ski muni d'un dispositif amortisseur de vibrations, ce dernier comprenant un ensemble oscillant présentant une masse oscillante constituée par un matériau ayant une densité supérieure à 10 kg/dm³, des moyens élastiques de rappel en mousse de polymère, disposés de part et d'autre de cette masse, le tout étant logé dans un boîtier fixé à une partie du ski proche d'au moins l'une de ses extremités.

Un dispositif amortisseur de ce genre est connu, notamment du document DE-B-1 249 018 dans lequel deux masse oscillantes concentriques sont montées entre des éléments amortisseurs en matière élastiquement compressible. Un tel dispositif n'est cependant ni conçu, ni prévu pour amortir les vibrations dont un ski peut être l'objet.

Dans le document DE-A-2 747 084, il a déja été proposé de fixer sur un ski un dispositif amortisseur omnidirectionnel, comprenant notamment une masse oscillante logée dans de la mousse de polymère remplissant un boîtier.

Il existe, par ailleurs, plusieurs autres dispositifs pour amortir les vibrations d'un ski, tels que ceux décrits dans le DE-A-1 478 110 ou le US-A-4 018 454. Tous ces documents sont essentiellement relatifs aux structures de l'amortisseur, mais curieusement aucun d'eux ne concerne ni le dimensionnement, ni le choix des structures aptes à accorder l'ensemble oscillant à l'amortissement d'une gamme déterminée de fréquences. Or, on sait que les modes de vibration d'un ski sont nombreux et complexes, couvrant une gamme de fréquences allant de quelques Hz jusqu'à plusieurs milliers de Hz. A moins d'utiliser plusieurs amortisseurs différents pour même ski, capables de couvrir l'ensemble du spectre, il n'est pas possible d'obtenir un amortissement global. Dès lors, se pose le problème du choix des fréquences à amortir.

Des efforts ont été faits dans deux directions: d'une part, on a proposé des solutions en vue d'amortir les fréquences basses, essentiellement inférieurs à 50 Hz, par des ensembles oscillants du genre de ceux décrits dans les documents susmentionnés, d'autre part, on a envisagé des structures composites de ski aptes à absorber des vibrations de fréquences relativenent élevées, de l'ordre de 500 Hz et plus. On constate que l'amortissement des vibrations de fréquence basse nécessite des dispositifs volumineux et lourds et que l'amélioration qu'ils peuvent apporter est loin de compenser les inconvénients qui leur sont liés, découlant tant de leur encombrement à la surface du ski que de leur poids. L'amortissment des fréquences relativement élevées est obtenu par un choix approprié de la structure composite du ski et des matériaux entrant dans sa fabrication. En ce qui concerne les vibrations de basse fréquence, dont les effets sont perceptibles à l'oeil, il faut encore noter qu'elles sont fortement atténuées au contact de la neige.

Reste alors le problème des vibrations de fréquence intermédiaire, comprise entre 100 et 500 Hz, qui peuvent engendrer des niveaux d'énergie élevés et être entretenues, voire même amplifiées, par le contact du ski avec la neige, lors d'un virage ou d'un dérapage, par exemple. Par ces vibrations, la prise des carres sur la neige dure ou glacée peut être fortement diminuée, réduisant ainsi la précision du guidage et augmentant l'effort musculaire nécessaire.

Il est très vraisemblabe que cette méconnaissance de l'importance des vibrations de fréquence moyenne, compris ente 100 et 500 Hz, sur le comportement du ski constitue l'un des facteurs essentiels de l'insuccès des solutions proposées jusqu'ice, quand bien même des efforts pour leur développement aient été déployés depuis bientôt vingt ans.

La présente invention se propose de remédier aux inconvénients susmentionnés.

A cet effet, la présente invention a pour objet un ski muni d'un dispositif amortissuer de vibrations, tel que défini par la revendication 1.

L'aspect remarquable de cette invention réside dans le fait que la solution proposée permet de résoudre simultanément l'ensemble des problèmes évoqués. Elle permet d'amortir les vibrations dans une gamme de fréquences relativement large. Par ailleurs, le rapport entre le poids du dispositif, son volume et l'effet d'abaissement du niveau d'énergie obtenu est non seulement remarquable, mais aussi tout à fait surprenant. L'efficacité du dispositif malgré la présence d'une masse très faible s'explique par le fait que l'on réduit davantage l'énergie en amortissant des vibrations à fréquence plus élevée qu'en amortissant des vibrations à basse fréquence étant donné que l'amortisseur agit sur un plus grand nombre de cycles par unité de temps, ce qui augmente le rendement proportionnellement à la fréquence. Parmi les avantages de cette invention, il faut en outre relever la simplicité du dispositif amortisseur aussi bien dans sa structure, dans les éléments qui le composent, que dans son montage sur le ski, comme on le verra ci-après.

Un autre avantage de cette invention provient du fait que la masse des moyens élastiques de rappel est négligeable de sorte que ces moyens n'ont pas de fréquence propre susceptible d'interférer avec celle de l'ensemble oscillant. En faisant un choix d'une faible masse par unité de surface, associée à une mousse de faible poids spécifique, susceptible d'accorder l'ensemble sur la gamme de fréquences recherchée, l'amplitude peut être réduit au maximum même en tenant compte d'accélérations supérieures à 100 g, compte tenu de la force hystérèse de la caractéristique élatistique de la mousse. En outre, avec une très faible masse, même si accidentellement l'amplitude de la course disponible est inférieure à la capacité d'absorption d'énergie de la mousse, l'énergie résiduelle emmagasinée dans la masse en mouvement est trop faible pour endommager le boîtier dans lequel l'oscillateur est logé. Enfin, comme on le verra par la suite, la réduction des dimensions est telle qu'il devient possible d'effectuer, au moins en partie, l'intégration de l'ensemble oscillant au ski.

Le dessin annexé illustre, schématiquement et à titre d'exemple, une forme d'exécution du ski muni du dispositif amortisseur objet de la présente invention, ainsi qu'une variante de ce dispositif:

La fig. 1 est une vue en coupe axiale de ce dispositif;

la fig. 2 une vue partielle, de profil, du ski muni d'un tel dispositif.

La fig. 3 est une variante du dispositif de la fig. 1.

Les figs 4 et 5 sont des diagrammes d'amortissement comparatifs effectués avec un même ski, respectivement sans et avec le dispositif amortisseur selon l'invention.

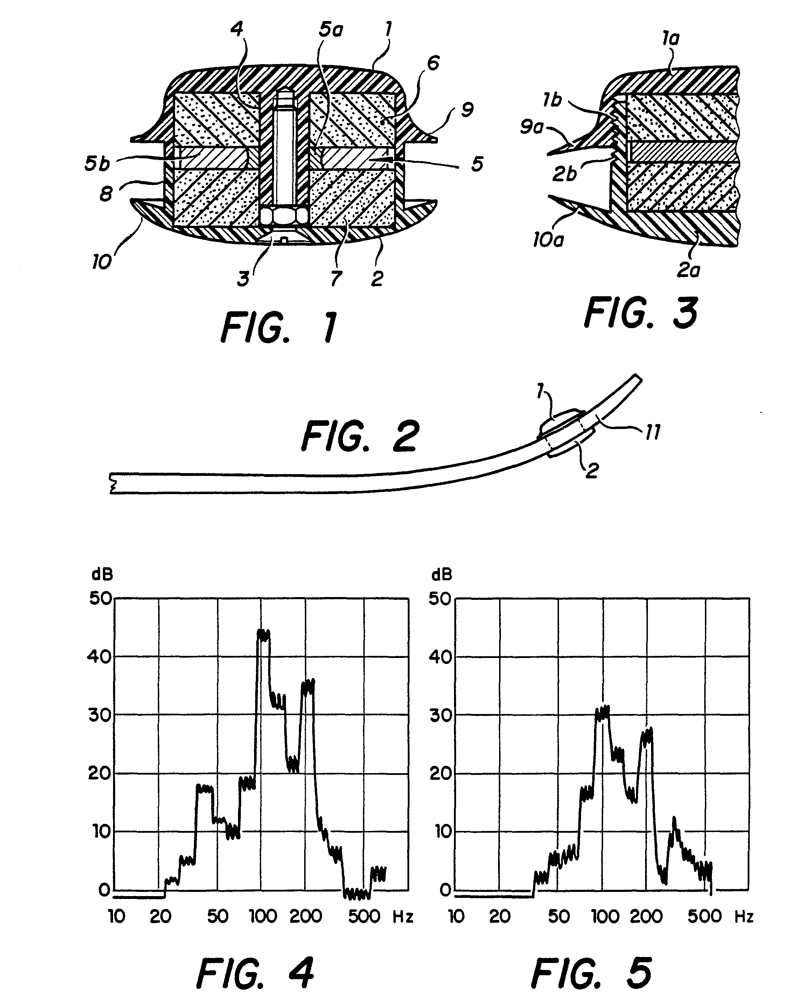

Le dispositif illustré par la fig. 1 comporte un boîtier formé de deux coquilles 1 et 2 assemblées par une vis 3 en prise avec un filetage correspondant ménagé dans une tige axiale 4, venue de fabrication avec le fond de la coquille 1. Cette tige 4 constitue un organe de guidage pour une masse oscillante 5 comprenant un coussinet 5a monté coulissant sur la tige et autour duquel est moulée une masse 5b, en un métal de densité élevée, supérieure à 10, par exemple du plomb. Le coussinet 5a peut être soit en métal, notamment en laiton, soit en matière plastique injectée, par exemple en nylon. La masse oscillante 5 est positionnée sur la tige 4 par deux rondelles 6 et 7, en mousse de polymère, prenant appui sur les fonds respectifs des coquilles 1 et 2.

La surface extérieure du boîtier présente une partie cylindrique 8 coaxiale à la tige 4. Cette partie cylindrique 8 est délimitée par deux portées 9 et 10 ménagées sur les coquilles 1, respectivement 2, et destinée à être engagée dans une ouverture correspondante de la spatule 11 du ski (fig. 2). En position serrée de la vis 3, les portées 9 et 10 emprisonnent le boîtier du dispositif dans cette spatule par appui contre les faces supérieure, respectivement inférieure, de la spatule 11. De préférence, ce boîtier est réalisé par moulage d'une matière suffisamment souple, tel le nylon 6.6, de façon que les portées 9 et 10 puissent se défomer suffisamment pour épouser parfaitement le profil des surfaces non planes de la spatule 11 du ski.

La fig. 2 montre, à l'échelle, quel est le rapport des dimensions du dispositif amortisuer et du ski. Comme on le voit, la hauteur totale de cet ensemble est de l'ordre de trois fois l'épaisseur de la spatule 11 et la coquille inférieure 2 fait saillie sous la spatule d'une hauteur inférieure à l'épaisseur de celle-ci, alors que la coquille supérieure dépasse d'environ 1,5 à 2 fois l'épaisseur de la spatule. Le poids totale de l'ensemble est de l'ordre de 20 à 25 g de sorte que la répartition des masses du ski est très peu modifiée. La masse oscillante 5 a une "masse" de 12 g.

La variante du dispositif illustrée par la fig. 3, se différencie uniquement par la structure du boîtier dont les coquilles 1a et 2a ne sont plus assemblées à vis, mais fixées par crantage de leurs parois latérales intérieure 1b, respectivement extérieure 2b, à surfaces munis d'ondulations parallèles au plan transversal du boîtier. Ces coquilles sont fixées l'une à l'autre par pression axiale d'une coquille contre l'autre. Ce mode de fixation a essentiellement pour but de simplifier le montage et de rendre le boîtier indéverrouillable. Les deux lèvres 9a et 10a forment un angle aigu avec le plan transversal du boîtier de sorte qu'elles tendent à converger et elles sont conformées en une matière plastique élastique pour leur permettre d'épouser les faces inférieure, respectivement supérieure, de la spatule afin de garantir l'étanchéité du boîtier et des surface du boîtier en contact avec le ski. Ce contact intime, rigide et étanche, est important pour assurer une bonne reproductibilité de l'effet d'amortissement.

Différents essais ont été réalisés en laboratoire et sur piste avec différentes masse oscillantes 5 et différentes mousses. Il s'est avéré que, dans pratiquement tous le cas, les meilleurs comportements sur piste correspondent effectivement aux plus grands amortissements mesurés en laboratoire et ceci surtout dans la gamme de fréquence moyennes comprises entre environ 100 et 200 Hz.

Il apparaît donc que les très basses fréquences et les fréquences supérieures à 200 Hz n'ont qu'une influence secondaire.

Plusieurs types de mousses associées à différentes masses ont été testés de cette manière. Le diagramme de la fig. 5 montre l'effet d'amortissement de l'ensemble oscillant selon l'invention, comparativement au diagramme de la fig. 4, enregistré avec le même ski sans amortissement. Ces diagrammes ont été tracés en fixant le ski dans un étau et en l'excitant à l'aide d'un excentrique fixé à l'arbre d'un moteur, tournant à 2 ou 3 Hz, cet excentrique rencontrant une butée fixée au ski. On mesure ensuite, à tous les tiers d'octaves, les accélérations consécutives à cette excitation, à l'aide d'un accéléromètre relié à un appareil d'analyse et d'enregistrement Brüel et Kjaer. L'échelle des abscisses correspond à la fréquence en Hz et l'échelle des ordonnées à l'accélération exprimée en dB.

En comparant les deux diagrammes, et tout d'abord les gammes de fréquences entre 100 et 200 Hz, on observe une diminution de 14 dB à 100 Hz, de 9 dB à 130 Hz, de 6 dB à 160 Hz et de 9 dB à 200 Hz. Etant donné que chaque 6 dB correspond à une réduction de l'accélération d'un facteur 2, on constate que l'effet d'amortissement est considérable. Au-dessous de 100 Hz, on remarque également un amortissement notable à toutes les fréquences. Il n'y a que vers 300 Hz et plus que l'on enregistre une augmentation du niveau d'énergie, mais à ces fréquence l'amplitude est tellement faible que l'influence des oscillations est presque négligeable.

Le diagramme de la fig. 5 a été enregistré avec un ensemble oscillant formé d'une masse oscillante 5 d'environ 12 g et des rondelles d'une mousse de polyéther d'une densité de 38 kg/m$^3$ choisie notamment pour le bon effet d'amortissement obtenue aussi bien sur piste qu'en laboratoire. Toutes les mousses testées dans la même structure ont permis d'abaisser le niveau d'énergie des oscillations du ski à des degrés divers.

Les tests ont été réalisés avec des rondelles de mousse non précontrainte. La masse de 10 a 12 g en plomb présente une épaisseur de l'ordre de 3 mm et un diamètre de 22 mm. La hauteur axiale totale de l'ensemble oscillant est de 18 mm et la hauteur externe du boîtier est de 24 mm. L'oscillateur ainsi dimensionné présente un comportement non linéaire. Les dimensions citées ci-dessus ont essentiellement un intérêt dans le cas où le boîtier est partiellement logé dans l'épaisseur de la spatule, qui constitue évidemment la forme d'exécution préférée de l'invention.

Ces dimensions peuvent cependant subir des modifications. C'est ainsi que l'on peut changer la masse par unité de surface en fonction de la densité de la mousse choisie de manière à conserver à l'oscillateur ses caractéristiques d'amortissement désirées. On peut également procéder à des ajustements de l'oscillateur en fonction des caractéristiques propres au ski. On constate en effet, en examinant la fig. 2, que la présence de l'amortisseur sur la spatule, c'est-à-dir à l'endroit où le rendement énegétique est le plus favorable, ne forme pas une proéminence telle qu'elle empêche de décroiser les ski au cas où ceux-ci se trouveraient accidentellement croisés, ce qui constitue une garante de sécurité pour le skieur. Il est, de plus, possible de profiler extérieurement la coquille supérieure de façon plus aérodynamique que représentée au dessin ou de l'associer à un élément profilé à cet effet (non représenté) dans un but aussi bien décoratif, qu'en vue de faciliter le décroisement des skis. Il faut encore relever que si tous les exemples représentent un boîtier avec une masse oscillante circulaire, une telle masse pourrait évidemment présenter d'autres formes, par exemples polygonales: le terme diamètre devra, dans ce cas, se référer au cercle inscrit ou dans lequel est inscrite une telle forme polygonale.

Il est également évident que l'amorisseur fixé sur la spatule amortit les vibrations de la moitié antérieure de ski et qu'un autre amortisseur pourrait être placé à l'arrière de la fixation, au voisinage de l'autre extrémité du ski, pour amortir les vibrations de la moitié postérieure du ski.

## Revendications

1. Ski muni d'un dispositif amortisseur de vibrations, ce dernier comprenant un ensemble oscillant présentant une masse oscillante (5) constituée par un matériau ayant une densité supérieure à 10 kg/dm$^3$, des moyens élastiques de rappel (6, 7), en mousse de polymère, disposés de part et d'autre de cette masse (5), le tout étant logé dans un boîtier (1, 2) fixé à une partie du ski (11) proche d'au moins l'une de ses extrémités, caractérisé par le fait que ladite masse (5) est associée à des moyens de guidage (4) définissant un axe d'oscillation sensiblement perpendiculaire au plan de ladite partie du ski (11), qu'elle est formée par une plaquette dont le rapport épaisseur/diamètre est compris entre 1/3 et 1/30, et que le rapport entre la dimension suivant ledit axe d'oscillation de cette masse (5) et celle de l'ensemble oscillant (5, 6, 7) n'excède pas 1/4, ce dispositif amortisseur présentant de par ces caractéristiques vis-à-vis des vibrations du ski un effet moyen de réduction d'accélération d'au moins un facteur 2 dans la gamme de fréquences comprise entre environ 100 et 200 Hz.

2. Ski selon la revendication 1, caractérisé par le fait que la dimension suivant ledit axe d'oscillation de l'ensemble oscillant (5, 6, 7) est au plus égale à quatre fois l'épaisseur la plus faible du ski.

3. Ski selon l'une des revendications 1 ou 2, caractérisé par le fait que le rapport épaisseur/diamètre de la masse oscillante (5) est compris entre 1/6 et 1/20.

4. Ski selon la revendication 3, caractérisé par le fait que la masse de ladite plaquette est au plus égale à 15 g.

5. Ski selon la revendication 2, caractérisé par le fait que le dispositif est noyé au moins en partie dans l'épaisseur de la spatule (11) du ski.

6. Ski selon la revendication 5, caractérisé par le fait que ledit boîtier comprend deux coquilles (1, 2) assemblées ménageant une enceinte fermée et présentant extérieurement une paroi latérale (8) à génératrice parallèle audit axe d'oscillation, dont la section droite correspond à une ouverture traversant la spatule (11) et est délimitée axialement par deux portées (9,10) destinées à prendre appui contre les faces supérieure, respectivement inférieure, du ski.

7. Ski selon la revendication 6, caractérisé par le fait qu'une partie (2) dudit boîtier fait saillie de la face inférieure de la spatule (11).

8. Ski selon la revendication 7, caractérisé par le fait que la hauteur de la portion du boîtier (1, 2) logée dans l'épaisseur de la spatule (11) et sous la face inférieure de la spatule est de l'ordre de 30 à 50 % de la hauteur totale de ce boîtier.

9. Ski selon la revendication 6, caractérisé par le fait que chacune desdites portées (9, 10) est associée à un joint assurant l'étanchéité entre la surface du ski et chacune de ces portées.

10. Ski selon la revendication 9, caractérisé par le fait que chaque portée est constituée par une lèvre (9a, 10a) en un matériau élastiquement déformable, dont la face d'appui forme, au repos, un angle aigu avec un plan transversal au boîtier de manière à obtenir un contact étanche avec les surfaces supérieure, respectivement inférieure, de la spatule en position d'assemblage desdites coquilles (1a, 2a).

11. Ski selon la revendication 6, caractérisé par le fait que lesdites coquilles (1a, 2a) comprennent deux parois latérales respectives concentriques, de diamètre tel qu'elles puissent s'emboîter l'une dans l'autre, les faces en regard de ces parois présentant des éléments d'accrochage mutuels (1b, 2b) faisant prise les uns sur les autres consécutivement à une pression axiale exercée conjointement sur les deux coquilles (1a, 2a).

12. Ski selon la revendication 6, caractérisé par un arbre (4) s'étendant dans ladite enceinte coaxialement audit axe, ladite masse étant montée à coulissement sur cet arbre par l'intermédiaire d'un matériau de glissement (5a) recouvrant au moins la surface d'une ouverture axiale ménagée à travers cette masse.

13. Ski selon la revendication 1, caractérisé par le fait que le poids total du dispositif n'excède pas 30 g.

14. Ski selon la revendication 1, caractérisé par le fait que la densité de la mousse de polymère dans laquelle sont réalisés les moyens de rappel élastiques est inférieure à 80 kg/m³.

## Patentansprüche

1. Mit einer Schwingungsdämpfungsvorrichtung ausgerüsteter Ski, die eine oszillierende Anordnung mit einer oszillierenden Masse (5), die durch ein Material mit einer Dichte oberhalb 10 kg/dm³ gebildet ist, und mit zu beiden Seiten dieser Masse (5) angeordneten, elastischen Rückstellmitteln (6, 7) aus Polymerschaum aufweist, wobei das Ganze in einem Gehäuse (1, 2) untergebracht ist, das an einem Teil des Skis (11) nahe wenigstens eines seiner Enden befestigt ist, dadurch gekennzeichnet, daß die Masse (5) mit Führungseinrichtungen (4) versehen ist, die eine im wesentlichen zur Ebene dieses Skiteiles (11) senkrechte Schwingungsachse festlegen, daß sie durch eine Platte gebildet ist, deren Verhältnis Dicke/Durchmesser zwischen 1/3 und 1/30 liegt, und daß das Verhältnis zwischen der Abmessung dieser Masse gemäß der Schwingungsachse und jener der oszillierenden Einheit (5, 6, 7) 1/4 nicht überschreitet, wobei die Dämpfungsvorrichtung, abgesehen von den Eigenschaften gegenüber den Schwingungen des Skis, einen mittleren Effekt der Geschwindigkeitsverringerung um wenigstens einen Faktor 2 im Frequenzbereich zwischen etwa 100 und 200 Hz besitzt.

2. Ski nach Anspruch 1, dadurch gekennzeichnet, daß die Abmessung der oszillierenden Einheit (5, 6, 7) gemäß der Schwingungsachse höchstens dem Vierfachen der geringsten Dicke des Skis gleich ist.

3. Ski nach Anspruch 1 oder 2, dadurch gekennzeichnet, daß das Verhältnis Dicke/Durchmesser der oszillierenden Masse (5) zwischen 1/6 und 1/20 liegt.

4. Ski nach Anspruch 3, dadurch gekennzeichnet, daß die Masse dieser Platte höchstens gleich 15 g ist.

5. Ski nach Anspruch 2, dadurch gekennzeichnet, daß die Vorrichtung wenigstens teilweise in die Schaufel (1) des Skis versenkt ist.

6. Ski nach Anspruch 5, dadurch gekennzeichnet, daß das Gehäuse zwei miteinander vereinigte Schalen (1, 2) aufweist, die eine geschlossene Umhüllung bilden und nach außen eine seitliche Wand (8) mit einer zur Schwingungsachse parallelen Erzeugenden haben, wobei der Querschnitt einer die Schaufel (11) durchsetzenden Öffnung entspricht und in Axialrichtung von zwei Trägern (9, 10) begrenzt ist, die sich an den oberen bzw. unteren Flächen des Skis abstützen.

7. Ski nach Anspruch 6, dadurch gekennzeichnet, daß ein Teil (2) des Gehäuses über die untere Fläche der Schaufel (11) hervorragt.

8. Ski nach Anspruch 7, dadurch gekennzeichnet, daß die Höhe des Abschnittes des Gehäuses (1, 2), der in der Dicke der Schaufel (11) angeordnet ist und unterhalb der unteren Fläche der Schaufel sich befindet, in der Größenordnung von 30 bis 50 % der Gesamthöhe dieses Gehäuses ist.

9. Ski nach Anspruch 6, dadurch gekennzeichnet, daß jeder dieser Träger (9, 10) mit einer Dichtung versehen ist, die Dichtigkeit zwischen der Oberfläche des Skis und jedem der Träger gewährleistet.

10. Ski nach Anspruch 9, dadurch gekennzeichnet, daß jeder Träger von einer Lippe (9a, 10a) aus einem elastisch verformbaren Material gebildet ist, dessen Abstützfläche im Ruhezustand einen spitzen Winkel mit der Querebene des Gehäuses bildet, und zwar derart, daß ein dichter Kontakt zwischen den oberen bzw. unteren Flächen der Schaufel im zusammengesetzten Zustand der Schalen (1a, 2a) erhalten wird.

11. Ski nach Anspruch 6, dadurch gekennzeichnet, daß die Schalen (1a, 2a) zwei seitliche, jeweils konzentrische Wände besitzen, und zwar mit einem derartigen Durchmesser, daß sie sich ineinander verschachteln können, wobei die gegenüberliegenden Flächen dieser Wände gegenseitige Verankerungselemente (1b, 2b) haben, die auf einen axialen Druck, der gleichzeitig auf beide Schalen (1a, 2a) ausgeübt wird, ineinander eingreifen.

12. Ski nach Anspruch 6, dadurch gekennzeichnet, daß sich koaxial mit der Achse in der Umhüllung eine Welle erstreckt, wobei die Masse auf dieser Welle mit Hilfe eines Gleitmaterials (5a) verschiebbar angeordnet ist, das wenigstens die Oberfläche einer in dieser Masse eingearbeiteten axialen Öffnung überdeckt.

13. Ski nach Anspruch 1, dadurch gekennzeichnet, daß das Gesamtgewicht der Vorrichtung 30 g nicht überschreitet.

14. Ski nach Anspruch 1, dadurch gekennzeichnet, daß die Dichte des Polymerschaumes, in dem die elastischen Rückstellmittel gegeben sind, unterhalb 80 kg/m³ liegt.

## Claims

1. A ski comprising a vibration damping device, this device comprising an oscillating assembly provided with an oscillating weight (5) made of a material with a density above 10 kg/dm³, elastic return means (6, 7) made of polymer foam disposed on opposite sides of this weight (5), the whole assembly being housed in a receptacle (1, 2) fastened to the ski at a portion (11) thereof near to at least an end, characterized in that said weight (5) is associated with guide means (4) defining an axis of oscillation substantially perpendicular to the plane of said portion (11) of the ski, in that it is constituted by a plate having a thickness/diameter ratio between 1/3 and 1/30 and in that the ratio between the axial dimension of this plate (5) and the axial length of the oscillating assembly (5, 6, 7) is less than 1/4, this damping device being capable, in view of the above vibration damping characteristics, to reduce the acceleration by at least an average factor of 2 for a frequency in the range between about 100 and 200 Hz.

2. The ski defined in claim 1 wherein the axial dimension of said assembly (5, 6, 7) is at most equal to 4 times the thickness of said blade at the finish portion thereof.

3. The ski defined in claim 1 or 2 wherein the ratio of the thickness to the diameter of said plate is between 1/6 and 1/20.

4. The ski defined in claim 3 wherein said plate has a mass of at most 15 grams.

5. The ski defined in claim 2 wherein said device is received at least in part within the thickness of the ski blade (11).

6. The ski defined in claim 5, wherein said receptacle is formed from two housing portions (1, 2) fastened together to provide a closed enclosure and provided externally with a side wall (8) the generants of which are parallel to the axis of oscillation, of which the cross-section corresponds to an opening across the ski-blade (11), and which is axially limited by two flanges (9, 10) sealing against the upper and lower faces of the ski, respectively.

7. The ski defined in claim 6, wherein said receptacle projects below the lower face of said blade.

8. The ski defined in claim 8, wherein the height of the receptacle (1, 2) received in the thickness of said blade (11) and projecting below said blade is of the order of 30 to 50 % of the total height of the receptacle.

9. The ski defined in claim 6 wherein each of said flanges (9, 10) is provided with a gasket sealing each of said flanges against the surface of said ski.

10. The ski defined in claim 9 wherein each of said flanges is a lip (9a, 10a) made of an elastically deformable material forming at rest by its resting face an acute angle with a transverse plane of the receptacle for effective sealed contact with the upper and lower surfaces of said blade, respectively, when said two housing portions (1a, 2a) are assembled together.

11. The ski defined in claim 6, wherein said housing portions (1a, 2a) comprise two respective side walls of such diameter that they can nest into each other, the faces in front of these walls being provided with mating fastening means (1b, 2b) which engage one another when an axial pressure is applied simultaneously on both housing portions (1a, 2a).

12. The ski defined in claim 6, comprising a post in said enclosure and extending coaxially with said axis, the weight being mounted slidingly on this post by means of a low friction material coating (5a) covering at least the surface of an axial opening in this weight.

13. The ski defined in claim 1 wherein the weight of said device is not greater than 30 grams.

14. The ski defined in claim 1, in which the density of the polymer foam making the elastic return means is below 80 kg/dm³.

0 102 653

FIG. 1

FIG. 3

FIG. 2

FIG. 4

FIG. 5

1